# EUROPÄISCHE PATENTSCHRIFT

(11) **EP 3 898 343 B1**
(45) Veröffentlichungstag und Bekanntmachung des Hinweises auf die Patenterteilung: **09.11.2022**
(21) Anmeldenummer: 19813254.0
(22) Anmeldetag: 25.11.2019
(51) Int. Cl.: B60R 21/203

(54) **LENKVORRICHTUNGSBAUGRUPPE FÜR EIN KRAFTFAHRZEUG**
STEERING ASSEMBLY FOR A MOTOR VEHICLE
ENSEMBLE DE DIRECTION POUR UN VÉHICULE AUTOMOBILE

(30) Priorität: 18.12.2018 DE 202018107231 U
(43) Veröffentlichungstag der Anmeldung: 27.10.2021
(73) Patentinhaber: ZF Automotive Safety Germany GmbH, 63743 Aschaffenburg (DE)
(72) Erfinder: HAAS, Markus, 64760 Oberzent (DE)
(74) Vertreter: ZF Patentabteilung - DIPS
(86) Internationale Anmeldenummer: PCT/EP2019/082418
(87) Internationale Veröffentlichungsnummer: WO 2020/126327

(56) Entgegenhaltungen:
- US-A- 5 092 628
- US-A1- 2002 171 229
- US-A1- 2009 309 337
- US-A1- 2012 080 868

## Beschreibung

Die Erfindung betrifft eine Lenkvorrichtungsbaugruppe für ein Kraftfahrzeug, mit einer Lenkachse, um welche die Lenkvorrichtungsbaugruppe in ihrem eingebauten Zustand drehbar ist, einem ersten Baugruppenelement und einem zweiten Baugruppenelement, wobei die beiden Baugruppenelemente durch eine erste Verbindung, insbesondere eine erste Rastverbindung, sowie eine zweite Verbindung, insbesondere eine zweite Rastverbindung, miteinander verbunden sind, wobei die erste Verbindung ein elastisches Rastelement aufweist, das zum Lösen der ersten Verbindung in einer Richtung quer zur Lenkachse auslenkbar ist, und wobei die zweite Verbindung durch eine axiale Beaufschlagung der Baugruppenelemente voneinander weg lösbar ist.

Derzeit umfassen herkömmliche Lenkvorrichtungsbaugruppen von Kraftfahrzeugen meist eine drehbare Lenkvorrichtung, insbesondere ein Lenkrad, sowie ein im Nabenbereich der Lenkvorrichtung befestigtes Gassackmodul, an dem starre Fanghaken zur Verrastung mit der Lenkvorrichtung vorgesehen sein können. Die Montage des Gassackmoduls erfolgt dann zum Beispiel mittels zweier Rastmechanismen, die unterschiedliche Aufgaben erfüllen. Die starren Fanghaken verrasten dabei mit einem an der Lenkvorrichtung vormontierten, elastischen Rastelement (erster Rastmechanismus) und greifen darüber hinaus in Schaumtaschen der Lenkvorrichtung ein, mit denen sie ebenfalls verrasten (zweiter Rastmechanismus). Der erste Rastmechanismus stellt nach einer Aktivierung des Gassackmoduls sicher, dass sich das Gassackmodul auch bei hohen Axialkräften nicht von der Lenkvorrichtung trennt, sondern zuverlässig mit dieser verbunden bleibt. Im normalen Fahrbetrieb, das heißt also vor einer Aktivierung des Gassackmoduls, kann das beispielsweise als Federdraht ausgeführte elastische Rastelement, von den starren Fanghaken beabstandet sein. Die Feinpositionierung des Gassackmoduls im normalen Fahrbetrieb gewährleistet der zweite Rastmechanismus.

Im Zuge einer Demontage des Gassackmoduls müssen die beiden Rastverbindungen wieder gelöst werden, um das Gassackmodul von der Lenkvorrichtung entfernen zu können. Hierfür wird bei herkömmlichen Lenkvorrichtungsbaugruppen meist Spezialwerkzeug benötigt. Außerdem ist die Demontage für einen Monteur insgesamt recht diffizil sowie zeit- und kraftaufwendig.

Die US 5,092,628 A offenbart ein Gassackmodul mit einem mechanischen Beschleunigungssensor zur Auslösung eines Gasgenerators bei einer vorgegebenen Fahrzeugverzögerung sowie einem Sperrmechanismus, der den Beschleunigungssensor blockiert, um eine Fehlauslösung des Gasgenerators während der Modulmontage zu verhindern. Das Gassackmodul ist insbesondere ein Fahrergassackmodul zur Befestigung an einem Fahrzeuglenkrad, wobei jedoch auf die konkrete Modulmontage nicht näher eingegangen wird. Die US 2009/0309337 A1 offenbart eine Befestigungsanordnung zur Befestigung eines Airbag-Moduls.

Aufgabe der Erfindung ist es, eine Lenkvorrichtungsbaugruppe zu schaffen, bei der ein zum Beispiel als Gassackmodul ausgebildetes erstes Baugruppenelement schnell, passgenau und robust an einem zum Beispiel als Lenkvorrichtung ausgebildeten zweiten Baugruppenelement montierbar ist, sich aber auch mit geringem Aufwand wieder rasch vom zweiten Baugruppenelement demontieren lässt.

Erfindungsgemäß wird diese Aufgabe gelöst durch eine Lenkvorrichtungsbaugruppe der eingangs genannten Art, bei der ein Keilkörper vorgesehen ist, welcher quer zur Lenkachse eine Keillänge und in Richtung der Lenkachse eine veränderliche Keilhöhe aufweist, wobei die Keillänge, die Keilhöhe und ein Neigungswinkel des Keilkörpers so aufeinander abgestimmt sind, dass sowohl die erste Verbindung als auch die zweite Verbindung der Baugruppenelemente durch eine lineare Bewegung des Keilkörpers in Keillängsrichtung lösbar ist.

Gemäß einer Ausführungsform der Lenkvorrichtungsbaugruppe weist das erste Baugruppenelement einen im Wesentlichen starren Fanghaken zur Verrastung mit dem elastischen Rastelement auf.

Das elastische Rastelement ist bevorzugt am zweiten Baugruppenelement montiert, sodass der Fanghaken und das elastische Rastelement die erste (Rast-) Verbindung ausbilden können.

Gemäß einer weiteren Ausführungsform der Lenkvorrichtungsbaugruppe umfasst das erste Baugruppenelement eine Rastausnehmung und das zweite Baugruppenelement einen federbeaufschlagten Rastkörper zur Verrastung mit der Rastausnehmung. Folglich können der federbeaufschlagte Rastkörper und die Rastausnehmung die zweiten (Rast-) Verbindung ausbilden.

Zur Bildung der zweiten Rastverbindung ist alternativ jedoch auch denkbar, dass das zweite Baugruppenelement Schaumtaschen und das erste Baugruppenelement jeweils zugeordnete, starre Schaumhaken umfasst, welche mit diesen Schaumtaschen verrasten können.

Vorzugsweise ist der Keilkörper in Keillängsrichtung begrenzt verschieblich am zweiten Baugruppenelement befestigt und zwischen einer Rastposition, in der die beiden Baugruppenelemente in axialer Richtung miteinander verbunden sind, sowie einer Demontageposition, in der die beiden Baugruppenelemente in axialer Richtung unverbunden sind, bewegbar. Optional kann ein Keilkörper-Federelement vorgesehen sein, welches den Keilkörper in die Rastposition beaufschlagt.

Mit Bezug auf die Lenkachse kann die Keillängsrichtung des Keilkörpers insbesondere einer Radialrichtung der Lenkvorrichtungsbaugruppe entsprechen.

Gemäß einer weiteren Ausführungsform der Lenkvorrichtungsbaugruppe ist das erste Baugruppenelement ein Gassackmodul und das zweite Baugruppenelement eine Lenkvorrichtung, insbesondere ein Fahrzeuglenkrad. Alternativ ist natürlich auch denkbar, dass das erste Baugruppenelement der Lenkvorrichtung und das zweite Baugruppenelement dem Gassackmodul entspricht.

Die Lenkvorrichtung weist in dieser Ausführungsform bevorzugt ein Verankerungsbauteil mit einstückig angeformten Fortsätzen zur begrenzt beweglichen Lagerung des elastischen Rastelements und/oder des Keilkörpers auf. Rastkörper und Keilelemente lassen sich auf diese Weise mit geringem fertigungstechnischen Aufwand schnell und einfach am zweiten Baugruppenelement vormontieren. Das Verankerungsbauteil ist beispielsweise ein Lenkradskelett oder eine fest mit dem Skelett verbundene Zwischenplatte der Lenkvorrichtung.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 eine perspektivische Explosionsansicht einer erfindungsgemäßen Lenkvorrichtungsbaugruppe;
- Figur 2 eine perspektivische Ansicht der Lenkvorrichtungsbaugruppe gemäß Figur 1 vor ihrem Zusammenbau;
- Figur 3 einen Schnitt durch die Lenkvorrichtungsbaugruppe gemäß Figur 2 vor ihrem Zusammenbau;
- Figur 4 ein Schnittdetail der Lenkvorrichtungsbaugruppe gemäß Figur 2 im Bereich einer zweiten Rastverbindung bei ihrem Zusammenbau;
- Figur 5 einen Schnitt durch die Lenkvorrichtungsbaugruppe gemäß Figur 2 nach ihrem Zusammenbau;
- Figur 6 einen Schnitt durch die Lenkvorrichtungsbaugruppe gemäß Figur 2 bei der Demontage eines ersten Baugruppenelements; und
- Figur 7 einen weiteren Schnitt durch die Lenkvorrichtungsbaugruppe gemäß Figur 2 bei der Demontage des ersten Baugruppenelements.

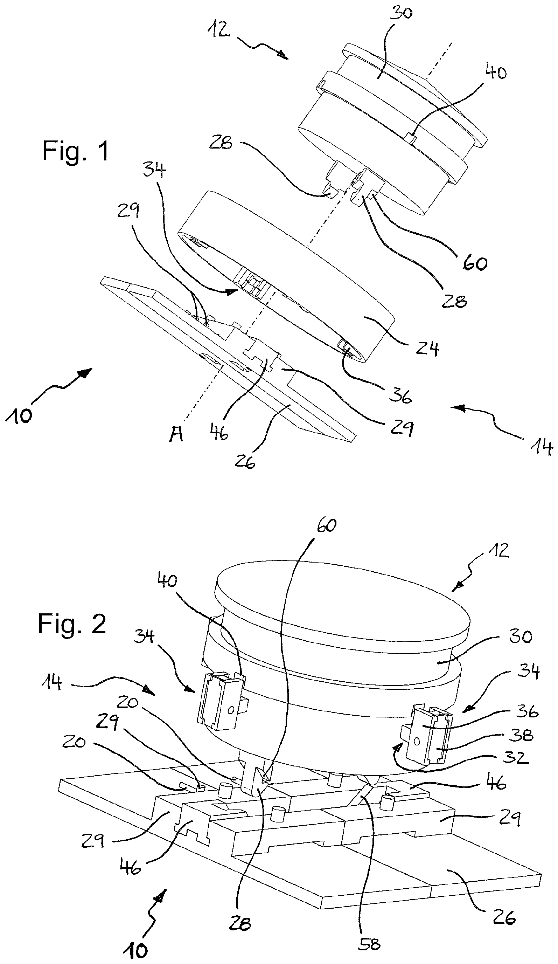

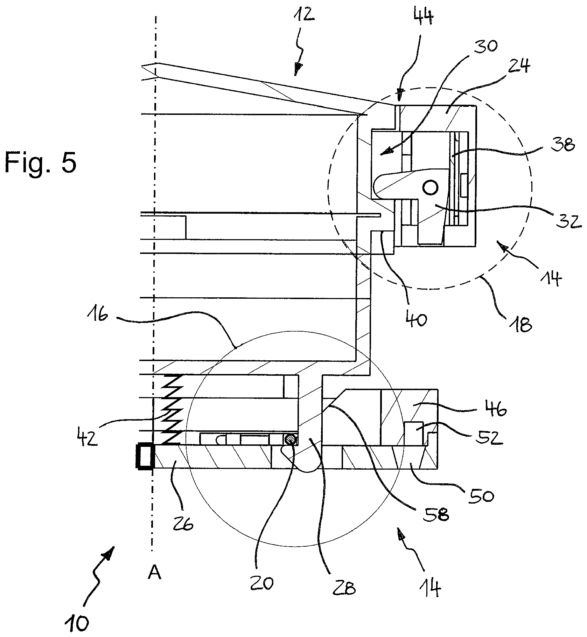

Die Figuren 1 bis 7 zeigen eine Lenkvorrichtungsbaugruppe 10 für ein Kraftfahrzeug, mit einer Lenkachse A, um welche die Lenkvorrichtungsbaugruppe 10 in ihrem eingebauten Zustand drehbar ist, einem ersten Baugruppenelement 12 und einem zweiten Baugruppenelement 14. Die beiden Baugruppenelemente 12, 14 sind gemäß Figur 5 durch eine erste Verbindung 16, insbesondere eine erste Rastverbindung, sowie eine zweite Verbindung 18, insbesondere eine zweite Rastverbindung, miteinander verbunden, wobei die erste Verbindung 16 ein elastisches Rastelement 20 aufweist, das zum Lösen der ersten Verbindung 16 in einer Richtung quer zur Lenkachse A auslenkbar ist. Das elastische Rastelement 20 ist am zweiten Baugruppenelement 14 vormontiert und beispielsweise als Federdraht ausgeführt. Die zweite Verbindung 18 kann durch eine axiale Beaufschlagung der Baugruppenelemente 12, 14 voneinander weg gelöst werden.

In der dargestellten Ausführungsform der Lenkvorrichtungsbaugruppe 10 ist das erste Baugruppenelement 12 ein Gassackmodul und das zweite Baugruppenelement 14 eine Lenkvorrichtung. Die Lenkvorrichtung ist dabei insbesondere ein Lenkrad, wobei in den Figuren lediglich Ausschnitte des Lenkrads im Nabenbereich schematisch angedeutet sind.

Alternativ sind natürlich auch Ausführungsvarianten der Lenkvorrichtungsbaugruppe 10 denkbar, bei denen das erste Baugruppenelement 12 der Lenkvorrichtung und das zweite Baugruppenelement 14 dem Gassackmodul entspricht.

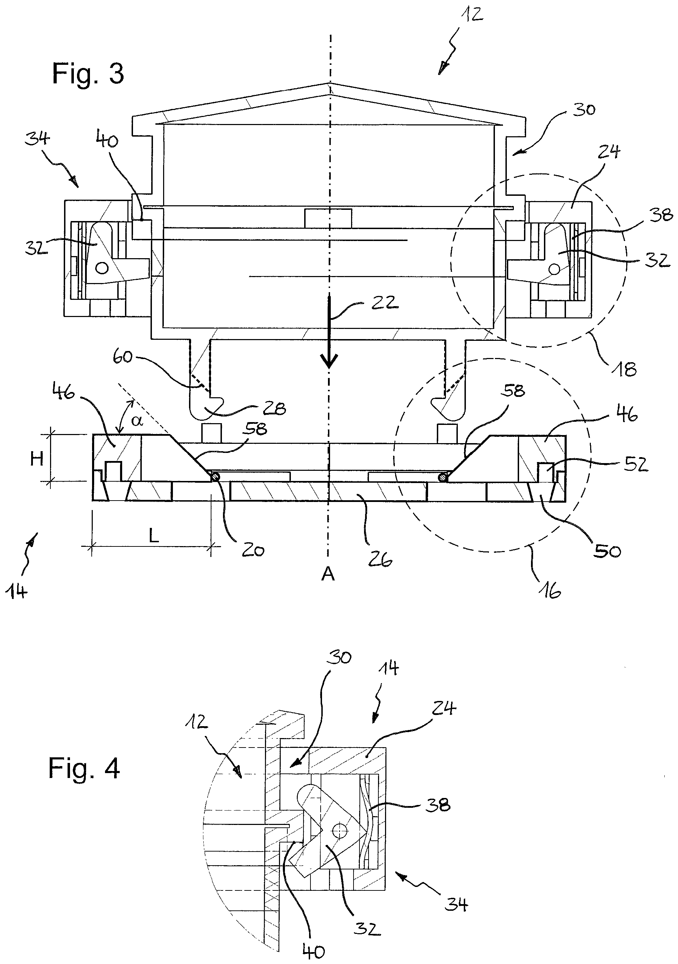

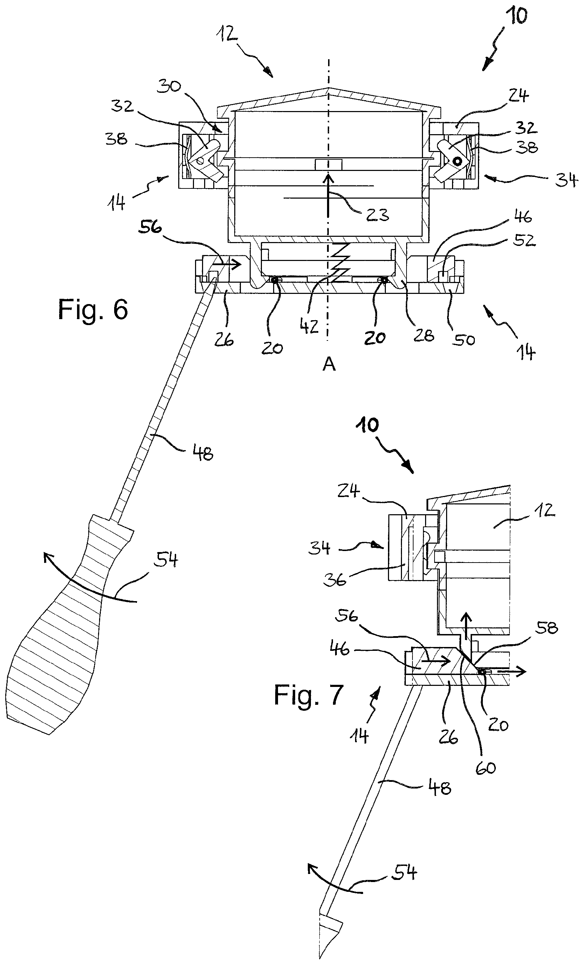

Das Gassackmodul weist eine Modullängsachse auf und wird bei seiner Montage in einer axialen Montagerichtung 22 bewegt, bis es mit der Lenkvorrichtung verrastet (siehe Figuren 3 bis 5). Eine Demontage des Gassackmoduls erfolgt in einer entgegengesetzten axialen Demontagerichtung 23 (siehe Figuren 6 und 7). Die Modullängsachse erstreckt sich im vorliegenden Fall parallel zur Lenkachse A der Lenkvorrichtung und kann insbesondere mit dieser identisch sein.

Das als Lenkvorrichtung ausgeführte zweite Baugruppenelement 14 umfasst eine Blende 24, die im zusammengebauten Zustand der Lenkvorrichtungsbaugruppe 10 zumindest teilweise sichtbar ist und an das als Gassackmodul ausgeführte erste Baugruppenelement 12 angrenzt. Ferner umfasst das zweite Baugruppenelement 14 ein Skelett, insbesondere ein aus dem Stand der Technik allgemein bekanntes Lenkradskelett mit einem Kranzabschnitt, einem Speichenabschnitt und einem Nabenabschnitt. Ein in den Figuren schematisch angedeutetes Verankerungsbauteil 26 für das Gassackmodul ist ein Skelettabschnitt, insbesondere ein Nabenabschnitt eines Lenkradskeletts, oder eine fest mit dem Skelett verbundene Zwischenplatte der Lenkvorrichtung. Obwohl in den schematischen Figuren zeichnerisch vereinfacht als separate Baueinheiten angedeutet, sind die Blende 24 und das Verankerungsbauteil 26 fest miteinander verbundene Komponenten des zweiten Baugruppenelements 14.

Am Verankerungsbauteil 26 des zweiten Baugruppenelements 14 ist das als Rastfeder ausgeführte, elastische Rastelement 20 vormontiert, welches nach der Montage des Gassackmoduls an der Lenkvorrichtung mit einem im Wesentlichen starren Fanghaken 28 des ersten Baugruppenelements 12 die erste Verbindung 16 ausbildet. Konkret sind am Verankerungsbauteil 26 einstückig angeformte Fortsätze 29 zur begrenzt beweglichen Lagerung des elastischen Rastelements 20 vorgesehen.

Ferner weist das erste Baugruppenelement 12 eine Rastausnehmung 30 und das zweite Baugruppenelement 14 einen federbeaufschlagten Rastkörper 32 zur Verrastung mit der Rastausnehmung 30 auf, um die zweite Verbindung 18 auszubilden.

Der Rastkörper 32 ist im vorliegenden Ausführungsbeispiel als Rasthebel ausgeführt und Teil einer Rasthebeleinheit 34, die ferner einen Träger 36 umfasst, an dem der Rasthebel zwischen einer Ausgangsstellung und einer Endmontagestellung schwenkbar gelagert ist, sowie ein Federelement 38 zur Beaufschlagung des Rasthebels in die Ausgangs- oder Endmontagestellung.

Der Träger 36 ist mit dem zweiten Baugruppenelement 14, konkret mit der Blende 24 des zweiten Baugruppenelements 14, fest verbunden, wobei der Träger 36 im vorliegenden Fall sogar einstückig in die Blende 24 integriert ist.

Das zweite Baugruppenelement 14 weist bevorzugt mehrere Rasthebeleinheiten 34 zur Ausbildung der zweiten Rastverbindung auf. Insbesondere sind an der ringförmig ausgeführten Blende 24 innenseitig vier in Umfangsrichtung gleichmäßig verteilte Rasthebeleinheiten 34 vorgesehen, wie in den Figuren 1 und 2 andeutungsweise zu erkennen.

Die Figuren 3 bis 5 zeigen Längsschnitte der Lenkvorrichtungsbaugruppe 10, wobei in Figur 3 ein Zustand vor der Montage, in Figur 4 ein Zustand während der Montage und in Figur 5 ein Zustand nach der Montage des ersten Baugruppenelements 12 am zweiten Baugruppenelement 14 dargestellt ist. Dementsprechend befindet sich jeder Rastkörper 32 gemäß Figur 3 in seiner Ausgangsstellung, gemäß Figur 4 in einer Zwischenstellung und gemäß Figur 5 in seiner Endmontagestellung.

Das Federelement 38 der Rasthebeleinheit 34 ist gemäß den Figuren 3 bis 5 eine am Träger 36 befestigte Blattfeder. Dieses Federelement 38 ist in der Ausgangsstellung des Rasthebels gemäß Figur 3 und der Endmontagestellung des Rasthebels gemäß Figur 5 weitgehend entspannt oder weist allenfalls eine gewisse Restspannung auf. Beim Verschwenken des Rasthebels zwischen seiner Ausgangsstellung und seiner Endmontagestellung wird das Federelement 38 durch einen Rasthebelvorsprung verformt und damit gespannt. Im vorliegenden Fall erreicht das Federelement 34 seine maximale Verformung etwa in der Mitte zwischen Ausgangsstellung und Endmontagestellung des schwenkbaren Rasthebels, wie in Figur 4 veranschaulicht.

Dementsprechend beaufschlagt das Federelement 38 den Rastkörper 32 abhängig von dessen aktueller Schwenkposition in die jeweils nähergelegene Ausgangs- oder Endmontagestellung.

Das als Gassackmodul ausgeführte, erste Baugruppenelement 12 umfasst einen axialen Anschlag 40 zum Verschwenken des Rastkörpers 32 von der Ausgangsstellung in die Endmontagestellung. In dieser Endmontagestellung greift der Rastkörper 32 dann in die Rastausnehmung 30 des ersten Baugruppenelements 12 ein, die gemäß Figur 1 als in Umfangsrichtung verlaufende Umfangsnut ausgeführt ist.

Wie bereits oben erwähnt, weist eines der beiden Baugruppenelemente 12, 14, hier das als Gassackmodul ausgebildete erste Baugruppenelement 12, den im Wesentlichen starren Fanghaken 28 und das andere der beiden Baugruppenelemente 12, 14, hier das als Lenkvorrichtung ausgebildete zweite Baugruppenkörper 14, das elastisches Rastelement 20 zur Verrastung mit dem Fanghaken 28 auf.

Anhand der Figuren 3 bis 5 wird im Folgenden die Montage des Gassackmoduls an der Lenkvorrichtung eines Kraftfahrzeugs mittels der oben beschriebenen Lenkvorrichtungsbaugruppe 10 erläutert.

Gemäß Figur 3 wird zunächst das erste Baugruppenelement 12 dem zweiten Baugruppenelement 14 in axialer Montagerichtung 22 zugeführt, wobei sich der Rastkörper 32 in seiner Ausgangsstellung befindet. Dabei kann das erste Baugruppenelement 12 über eine Führungsnut und den darin eingreifenden Rastkörper 32 in axialer Richtung am zweiten Baugruppenelement 14 geführt werden.

Bei dieser axialen Relativbewegung der beiden Baugruppenelemente 12, 14 gelangt der als Rasthebel ausgeführte Rastkörper 32 in Kontakt mit dem Anschlag 40 des ersten Baugruppenelements 12, wodurch der Rasthebel verschwenkt und das Federelement 38 gespannt wird, wie in Figur 4 dargestellt. Nach dem Überwinden einer Maximalverformung des Federelements 38 in einer Zwischenstellung des Rasthebels wird das erste Baugruppenelement 12 weiter in Montagerichtung 22 bewegt, bis der Rasthebel unterstützt von der Federkraft des Federelements 38 in die Rastausnehmung 30 des ersten Baugruppenelements 12 schnappt und damit seine Endmontagestellung einnimmt.

Bevor jedoch der Rasthebel seine Endmontagestellung erreicht, verrastet bereits das elastische Rastelement 20 mit dem Fanghaken 28.

Somit erfolgt die Feinpositionierung des Gassackmoduls relativ zur Lenkvorrichtung im normalen Fahrbetrieb, das heißt also vor einer Aktivierung des Gassackmoduls, durch die Rastverbindung zwischen dem Rastkörper 32 und der Rastausnehmung 30, während das elastische Rastelement 20 in axialer Richtung vom Fanghaken 28 vorzugsweise geringfügig beabstandet ist.

Die erste Rastverbindung zwischen dem elastischen Rastelement 20 und dem Fanghaken 28 wird erst nach einer Aktivierung des Gassackmoduls mechanisch beansprucht und stellt dann sicher, dass sich das Gassackmodul auch bei hohen auftretenden Kräften nicht von der Lenkvorrichtung trennt, sondern zuverlässig mit dieser verbunden bleibt.

Im normalen Fahrbetrieb erfolgt die axiale und radiale Positionierung zwischen dem Gassackmodul, insbesondere einem Modulgehäuse des Gassackmoduls, und der Lenkvorrichtung, insbesondere der Blende 24 der Lenkvorrichtung, somit ausschließlich über den Rastkörper 32.

Gemäß Figur 5 ist eine Feder 42 vorgesehen, beispielsweise eine Modulauswurf- oder Hupenfeder, die eine Unterkante der Rastausnehmung 30 axial gegen den vom Federelement 38 in der Endmontagestellung gehaltenen Rastkörper 32 beaufschlagt somit für eine präzise axiale Ausrichtung des Gassackmoduls sorgt.

Die radiale Ausrichtung des Gassackmoduls erfolgt über die in Umfangsrichtung verteilt angeordneten Rastkörper 32 und hängt im Wesentlichen nur von deren Geometrie, insbesondere deren radialen Abmessungen ab.

Infolge dieser kurzen Toleranzketten ist mit vergleichsweise geringem Aufwand eine besonders exakte axiale und radiale Feinpositionierung des Gassackmoduls relativ zur Lenkvorrichtung möglich. Auf diese Weise lassen sich auch hohe Spaltmaßanforderungen erfüllen, die beispielsweise für einen Spalt 44 zwischen einer Modulabdeckung des Gassackmoduls und der Blende 24 der Lenkvorrichtung Spaltbreiten von deutlich unter 1 mm, insbesondere von etwa 0,5 mm vorsehen.

Anstelle einer Verrastung zwischen den Rastkörpern 32 und wenigstens einer zugeordneten Rastausnehmung 30 kann die zweite Verbindung 18 auch auf alternative Art und Weise realisiert werden. So ist beispielsweise denkbar, dass das erste Baugruppenelement 12 starre Rasthaken und das zweite Baugruppenelement 14 eine Umschäumung mit Schaumtaschen aufweist, wobei jeder Rasthaken bei der Montage des ersten Baugruppenelements 12 am zweiten Baugruppenelement 14 in einer zugeordneten Schaumtasche verrastet, um jeweils eine zweite Verbindung 18 zu bilden.

Ausgehend von einer vollständig zusammengebauten Lenkvorrichtungsbaugruppe 10 wird im Folgenden genauer auf eine Demontage des ersten Baugruppenelements 12 vom zweiten Baugruppenelement 14 eingegangen.

Wie bereits oben erwähnt, sind die beiden Baugruppenelemente 12, 14 durch die erste Verbindung 16 sowie die zweite Verbindung 18 miteinander verbunden, wobei die erste Verbindung 16 das elastische Rastelement 20 aufweist, welches zum Lösen der ersten Verbindung 16 in einer Richtung quer zur Lenkachse A auslenkbar ist, und wobei die zweite Verbindung 18 durch eine axiale Beaufschlagung der Baugruppenelemente 12, 14 voneinander weg gelöst werden kann.

Gemäß Figur 3 umfasst die Lenkvorrichtungsbaugruppe 10 einen Keilkörper 46, der quer zur Lenkachse A eine Keillänge L und in Richtung der Lenkachse A eine veränderliche Keilhöhe H aufweist, wobei die Keillänge L, die Keilhöhe H und ein Neigungswinkel α des Keilkörpers 46 so aufeinander abgestimmt sind, dass sowohl die erste Verbindung 16 als auch die zweite Verbindung 18 der beiden Baugruppenelemente 12, 14 durch eine lineare Bewegung des Keilkörpers 46 in Keillängsrichtung lösbar ist. Mit Bezug auf die Lenkachse A entspricht die Keillängsrichtung dabei insbesondere einer Radialrichtung der Lenkvorrichtungsbaugruppe 10.

Im dargestellten Ausführungsbeispiel umfasst die Lenkvorrichtungsbaugruppe 10 zwei Keilkörper 46, die am zweiten Baugruppenelement 14 vormontiert sind. Konkret weist das Verankerungsbauteil 26 des zweiten Baugruppenelements 14 gemäß den Figuren 1 und 2 einstückig angeformte Fortsätze 29 zur begrenzt beweglichen Lagerung der Keilkörper 46 auf. Die beiden Keilkörper 46 liegen einander gegenüber und sind bezüglich der Lenkachse A in radialer Richtung aufeinander zu oder voneinander weg bewegbar. Selbstverständlich sind alternativ auch Ausführungsvarianten denkbar, bei denen Lenkvorrichtungsbaugruppe 10 eine andere Anzahl von Keilkörpern 46 aufweist, insbesondere nur einen oder drei Keilkörper 46.

Jeder Keilkörper 46 ist in Keillängsrichtung begrenzt verschieblich am zweiten Baugruppenelement 14 befestigt und zwischen einer Rastposition gemäß Figur 5, in der die beiden Baugruppenelemente 12, 14 in axialer Richtung miteinander verbunden sind, sowie einer Demontageposition gemäß Figur 6, in der die beiden Baugruppenelemente 12, 14 in axialer Richtung unverbunden sind, bewegbar.

Die Figuren 6 und 7 verdeutlichen das Lösen der ersten Verbindung 16 und der zweiten Verbindung 18 bei der Demontage des Gassackmoduls von der Lenkvorrichtung.

Gemäß Figur 6 wird ein Werkzeug 48 durch eine Öffnung 50 des zweiten Baugruppenelements 14 hindurch in eine Aussparung 52 des Keilkörpers 46 gesteckt. Anschließend wird der Keilkörper 46 durch eine Schwenkbewegung 54 des Werkzeugs 48 in Keillängsrichtung von der Rastposition in die dargestellte Demontageposition verschoben (siehe Pfeil 56).

Wie in Figur 7 dargestellt, greift der Keilkörper 46 bei dieser Verschiebung in Keillängsrichtung am elastischen Rastelement 20 an und bringt das elastische Rastelement 20 durch Verformung quer zur Lenkachse A außer Eingriff mit dem zugeordneten Fanghaken 28 des ersten Baugruppenelements 12, sodass die erste Rastverbindung gelöst ist. Außerdem greift eine geneigte Keilfläche 58 des Keilkörpers 46 an einer Gegenfläche 60 des ersten Baugruppenelements 12 an, sodass das erste Baugruppenelement 12 durch die Bewegung des Keilkörpers 46 in axialer Richtung vom zweiten Baugruppenelement 14 weg beaufschlagt und folglich die zweite Rastverbindung 14 gelöst wird. Auf diese Weise wurde das Federelement 38 in Figur 6 bereits wieder gespannt und der Rastkörper 32 in eine Zwischenstellung bewegt. Bei einer geringfügigen weiteren Bewegung des Keilkörpers 46 in Keillängsrichtung nimmt die Lenkvorrichtungsbaugruppe 10 unterstützt von den Federkräften des Federelements 38 und der Feder 42 einen Zustand ein, der dem Zustand vor der Montage entspricht (siehe Figur 3).

Die Lenkvorrichtungsbaugruppe 10 weist im vorliegenden Ausführungsbeispiel zwei starre Fanghaken 28 auf, denen jeweils ein elastisches Rastelement 20 zugeordnet ist. Dementsprechend können die beiden elastischen Rastelemente 20 bei der Demontage entweder nacheinander oder, mittels zweier Werkzeuge 48, gleichzeitig außer Eingriff mit den Fanghaken 28 gebracht werden.

Die Geometrie des Keilkörpers 46 ist dabei bevorzugt an die jeweiligen Randbedingungen der Lenkvorrichtungsbaugruppe 10 angepasst, um eine problemlose Demontage zu gewährleisten.

Insbesondere ist die Keillänge L, die Keilhöhe H und der Neigungswinkel α der geneigten Keilfläche 58 insbesondere so abgestimmt, dass sich bei der Verschiebung des Keilkörpers 46 in Keillängsrichtung eine Axialkraft zwischen der geneigten Keilfläche 58 und der Gegenfläche 60 erst dann aufbaut, wenn sich das elastische Rastelement 20 bereits weitgehend außer Eingriff mit dem zugeordneten Fanghaken 28 befindet. Auf diese Weise wird bei der Demontage ein unerwünschtes Verklemmen des Keilkörpers 46 zuverlässig vermieden.

## Patentansprüche

1. Lenkvorrichtungsbaugruppe für ein Kraftfahrzeug, mit
einer Lenkachse (A), um welche die Lenkvorrichtungsbaugruppe (10) in ihrem eingebauten Zustand drehbar ist,
einem ersten Baugruppenelement (12) und
einem zweiten Baugruppenelement (14),
wobei die beiden Baugruppenelemente (12, 14) durch eine erste Verbindung (16), insbesondere eine erste Rastverbindung, sowie eine zweite Verbindung (18), insbesondere eine zweite Rastverbindung, miteinander verbunden sind,
wobei die erste Verbindung (16) ein elastisches Rastelement (20) aufweist, das zum Lösen der ersten Verbindung (16) in einer Richtung quer zur Lenkachse (A) auslenkbar ist, und
wobei die zweite Verbindung (18) durch eine axiale Beaufschlagung der Baugruppenelemente (12, 14) voneinander weg lösbar ist,
**dadurch gekennzeichnet, dass** ein Keilkörper (46) vorgesehen ist, der quer zur Lenkachse (A) eine Keillänge (L) und in Richtung der Lenkachse (A) eine veränderliche Keilhöhe (H) aufweist,
wobei die Keillänge (L), die Keilhöhe (H) und ein Neigungswinkel (α) des Keilkörpers (46) so aufeinander abgestimmt sind, dass sowohl die erste Verbindung (16) als auch die zweite Verbindung (18) der Baugruppenelemente (12, 14) durch eine lineare Bewegung des Keilkörpers (46) in Keillängsrichtung lösbar ist.

2. Lenkvorrichtungsbaugruppe nach Anspruch 1, **dadurch gekennzeichnet, dass** das erste Baugruppenelement (12) einen im Wesentlichen starren Fanghaken (28) zur Verrastung mit dem elastischen Rastelement (20) aufweist.

3. Lenkvorrichtungsbaugruppe nach einem der vorhergehenden Ansprüche, **dadurch gekennzeichnet, dass** das elastische Rastelement (20) am zweiten Baugruppenelement (14) montiert ist.

4. Lenkvorrichtungsbaugruppe nach Anspruch 1 oder 2, **dadurch gekennzeichnet, dass** das erste Baugruppenelement (12) eine Rastausnehmung (30) und das zweite Baugruppenelement (14) einen federbeaufschlagten Rastkörper (32) zur Verrastung mit der Rastausnehmung (30) aufweist.

5. Lenkvorrichtungsbaugruppe nach einem der vorhergehenden Ansprüche, **dadurch gekennzeichnet, dass** der Keilkörper (46) in Keillängsrichtung begrenzt verschieblich am zweiten Baugruppenelement (14) befestigt ist und zwischen einer Rastposition, in der die beiden Baugruppenelemente (12, 14) miteinander verbunden sind, sowie einer Demontageposition, in der die beiden Baugruppenelemente (12, 14) unverbunden sind, bewegt werden kann.

6. Lenkvorrichtungsbaugruppe nach einem der vorhergehenden Ansprüche, **dadurch gekennzeichnet, dass** die Keillängsrichtung im Wesentlichen einer Radialrichtung der Lenkvorrichtungsbaugruppe (10) entspricht.

7. Lenkvorrichtungsbaugruppe nach einem der vorhergehenden Ansprüche, **dadurch gekennzeichnet, dass** das erste Baugruppenelement (12) ein Gassackmodul und das zweite Baugruppenelement (14) eine Lenkvorrichtung ist.

8. Lenkvorrichtungsbaugruppe nach Anspruch 7, **dadurch gekennzeichnet, dass** die Lenkvorrichtung ein Verankerungsbauteil (26) mit einstückig angeformten Fortsätzen (29) zur begrenzt beweglichen Lagerung des elastischen Rastelements (20) und/oder des Keilkörpers (46) aufweist.

## Claims

1. A steering device assembly for a motor vehicle, comprising
a steering axis (A) about which the steering device assembly (10) can rotate in the installed condition,
a first assembly element (12) and
a second assembly element (14),
wherein the two assembly elements (12, 14) are connected to each other by a first joint (16), especially a first locking joint, and a second joint (18), especially a second locking joint,
wherein the first joint (16) comprises a resilient locking element (20) which can be deflected in a direction transverse to the steering axis (A) to undo the first joint (16), and
wherein the second joint (18) can be undone by an axial load acting on the assembly elements (12, 14) away from each other,
**characterized in that** a wedge (46) is provided which has a wedge length (L) transverse to the steering axis (A) and a variable wedge height (H) in the direction of the steering axis (A),
wherein the wedge length (L), the wedge height (H) and an angle of inclination (α) of the wedge (46) are matched to one another such that both the first joint (16) and the second joint (18) of the assembly elements (12, 14) can be undone by a linear movement of the wedge (46) in the longitudinal direction of the wedge.

2. The steering device assembly according to claim 1, **characterized in that** the first assembly element (12) comprises a substantially rigid catch hook (28) for locking with the resilient locking element (20).

3. The steering device assembly according to any one of the preceding claims, **characterized in that** the resilient locking element (20) is mounted on the second assembly element (14).

4. The steering device assembly according to claim 1 or 2, **characterized in that** the first assembly element (12) comprises a locking recess (30) and the second assembly element (14) comprises a spring-loaded locking body (32) for locking with the locking recess (30).

5. The steering device assembly according to any one of the preceding claims, **characterized in that** the wedge (46) is attached to the second assembly element (14) to be restrictedly movable in the longitudinal direction of the wedge and can be moved between a locking position in which the two assembly elements (12, 14) are connected to each other and a disassembly position in which the two assembly elements (12, 14) are unconnected.

6. The steering device assembly according to any one of the preceding claims, **characterized in that** the longitudinal direction of the wedge substantially corresponds to a radial direction of the steering device assembly (10).

7. The steering device assembly according to any one of the preceding claims, **characterized in that** the first assembly element (12) is an airbag module and the second assembly element (14) is a steering device.

8. The steering device assembly according to claim 7, **characterized in that** the steering device includes an anchoring component (26) having integrally formed extensions (29) for restrictedly movable support of the resilient locking element (20) and/or the wedge (46).

## Revendications

1. Ensemble de dispositif de direction pour un véhicule automobile, comprenant
un axe de direction (A) autour duquel l'ensemble de dispositif de direction (10) peut tourner à l'état monté,
un premier élément d'assemblage (12) et
un deuxième élément d'assemblage (14),
pour lequel les deux éléments d'assemblage (12, 14) sontt reliés entre eux par une première liaison (16), en particulier une première liaison par encliquetage, ainsi que par une deuxième liaison (18), en particulier une deuxième liaison par encliquetage,
pour lequel la première liaison (16) présente un élément d'encliquetage élastique (20) qui peut être dévié dans une direction transversale à l'axe de direction (A) pour libérer la première liaison (16), et
pour lequel la deuxième liaison (18) peut être détachée par une sollicitation axiale des éléments d'assemblage (12, 14) en les éloignant l'un de l'autre,
**caractérisé en ce qu'**il est prévu un corps de clavette (46), lequel présente une longueur de clavette (L) transversalement à l'axe de direction (A) et une hauteur de clavette (H) variable dans la direction de l'axe de direction (A),
pour lequel la longueur de clavette (L), la hauteur de clavette (H) et un angle d'inclinaison (α) du corps de clavette (46) sont adaptés les uns aux autres, de telle sorte qu'aussi bien la première liaison (16) que la deuxième liaison (18) des éléments d'assemblage (12, 14) puissent être détachées par un mouvement linéaire du corps de clavette (46) dans la direction longitudinale de la clavette.

2. Ensemble de dispositif de direction selon la revendication 1, **caractérisé en ce que** le premier élément d'assemblage (12) présente un crochet d'arrêt (28) sensiblement rigide pour l'encliquetage avec l'élément d'arrêt élastique (20).

3. Ensemble de dispositif de direction selon l'une des revendications précédentes, **caractérisé en ce que** l'élément d'arrêt élastique (20) est monté sur le deuxième élément d'assemblage (14).

4. Ensemble de dispositif de direction selon la revendication 1 ou 2, **caractérisé en ce que** le premier élément d'assemblage (12) présente un évidement d'encliquetage (30) et le deuxième élément d'assemblage (14) présente un corps d'encliquetage (32) sollicité par ressort pour l'encliquetage avec l'évidement d'encliquetage (30).

5. Ensemble de dispositif de direction selon l'une des revendications précédentes, **caractérisé en ce que** le corps de clavette (46) est fixé au deuxième élément d'assemblage (14) de manière à pouvoir se déplacer de façon limitée dans la direction longitudinale de la clavette et peut être déplacé entre une position d'encliquetage, dans laquelle les deux éléments d'assemblage (12, 14) sont reliés entre eux, et une position de démontage, dans laquelle les deux éléments d'assemblage (12, 14) ne sont pas reliés.

6. Ensemble de dispositif de direction selon l'une quelconque des revendications précédentes, **caractérisé en ce que** la direction longitudinale de la clavette correspond sensiblement à une direction radiale de l'ensemble de dispositif de direction (10).

7. Ensemble de dispositif de direction selon l'une des revendications précédentes, **caractérisé en ce que** le premier élément d'assemblage (12) est un module de coussin gonflable et le deuxième élément d'assemblage (14) est un dispositif de direction.

8. Ensemble de dispositif de direction selon la revendication 7, **caractérisé en ce que** le dispositif de direction présente un composant d'ancrage (26) avec des prolongements (29) formés d'un seul tenant pour le montage à mobilité limitée de l'élément d'encliquetage élastique (20) et/ou du corps de clavette (46).
